# EUROPEAN PATENT APPLICATION

(11) **EP 1 655 009 A1**
(43) Date of publication of application: **10.05.2006**
(21) Application number: 04026349.3
(22) Date of filing: 05.11.2004
(51) Int. Cl.: A61G 5/04, B60L 7/00, G05G 5/00, B60T 7/10

(54) **Safety device of electric transporter**

(71) Applicant: Kwang Yang Motor Co., Ltd., San-Min Dist., Kaohsiung City (TW)
(72) Inventor: Lin, Tsang-Mao, Kaohsiung City (TW)
(74) Representative: Haft, von Puttkamer, Berngruber, Czybulka

(57) **Abstract**

The present invention discloses a safety device (5) disposed around a pulling rod (46) of a car body cover (41) of an electric transporter (3) and comprising a restorting mechanism (54) for keeping a safety cover (51) of the safety device (5) at a position around the periphery of the pulling rod (46) to restrict users from pulling the pulling rod (46). If the safety cover (51) of the safety device (5) is operated to release the pulling rod (46) from the restriction, the safety cover (51) of the safety device (5) presses at a position next to a blocking member (52) of the pulling rod (46). If the pulling rod (46) is pressed, the safety device (5) is restored by the restoring mechanism (54) to a position such that the periphery of the pulling rod (46) restricts the pulling rod (46) from being pulled.

## Description

### FIELD OF THE INVENTION

The present invention relates to a safety device, more particularly to a safety device of an electric transporter disposed around a pulling rod of a car body for restricting the movement of the pulling rod and avoiding driver to pull the pulling rod by mistake while the electric transporter is traveling.

### BACKGROUND OF THE INVENTION

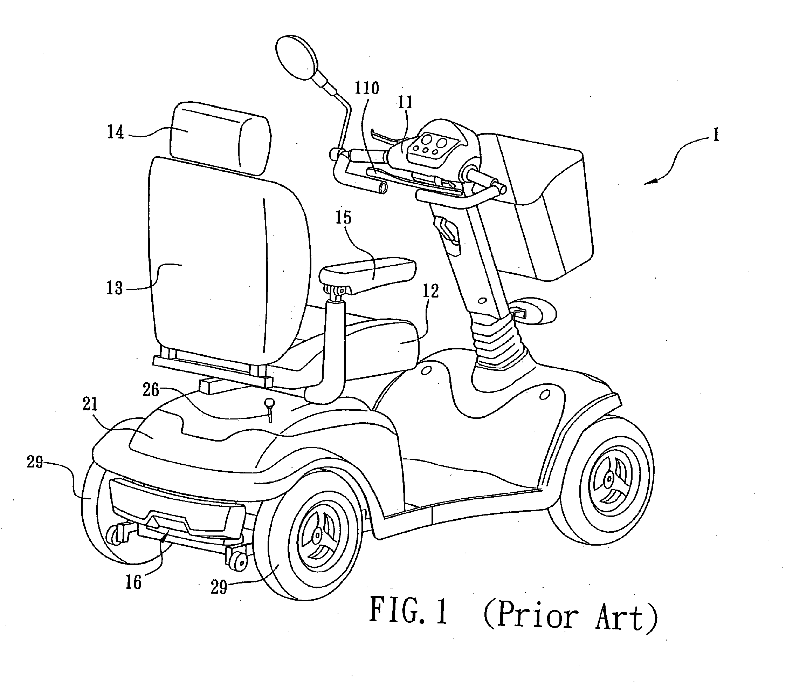

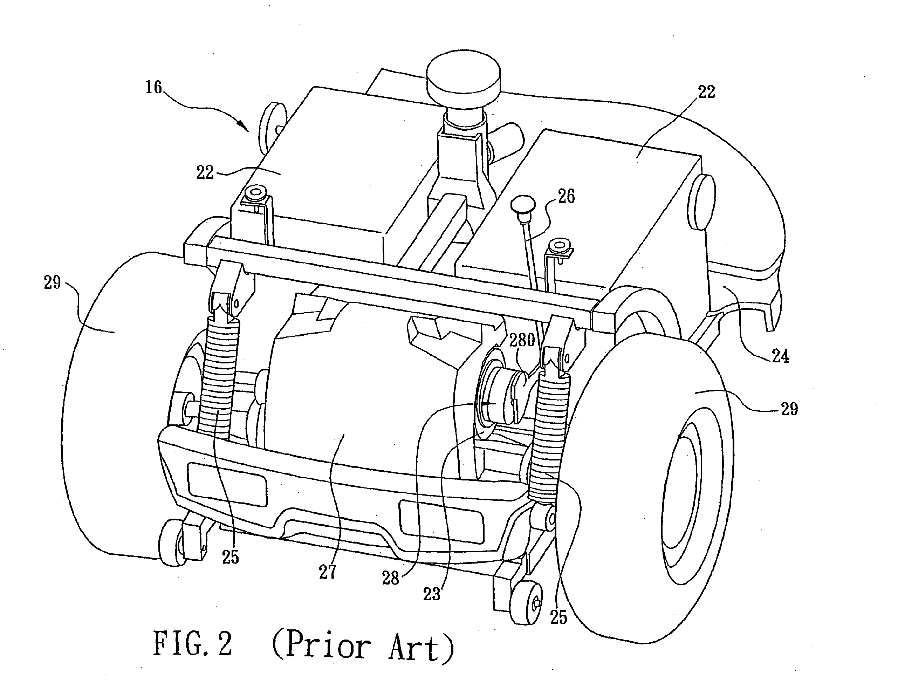

Please refer to FIGS. 1 and 2 for a traditional electric transporter 1, which comprises a steering handle module 11 disposed in the front; a seat cushion 12 disposed at the back; a backrest 13 disposed at the back of the seat cushion 12; a headrest 14 disposed at the top of the backrest 13, such that when a user drives the electric transporter 1, the user can sit on the seat cushion 12 and leans his/her back and head against the backrest 13 and the headrest 14 respectively; a pair of horizontal armrests 15 separately disposed on both sides of the seat cushion 12; and a driving section 16 disposed under the seat cushion 12.

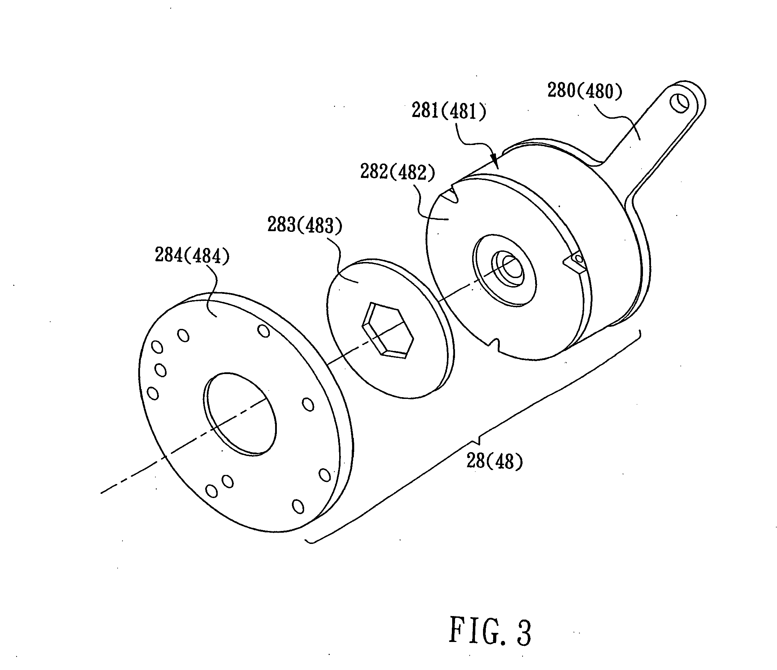

The driving section 16 is covered by a car body cover 21, and the driving section 16 comprises a battery 22 (such as an electric cell), a motor 23, a controller (not shown in the figure), a protective cover 27 and an electromagnetic brake 28. The electric transporter 1 achieves its shock absorption effect by a pair of shock absorbers 25, wherein the controller and the motor 23 are installed inside the protective cover 27, and the protective cover 27 is installed on a chassis 24 of the electric transporter 1, such that the car body cover 21 and the protective cover 27 can prevent dust and water moisture from entering into the controller and the motor 23. The battery 22, motor 23 and shock absorbers 25 are installed on the chassis 24, and the battery 22, motor 23 and controller are electrically coupled, such that the battery 22 can supply electric power to the motor 23 and controller as to rotate the motor 23 according to the control signal of the controller. The motor 23 is coupled to a transmission gearbox (not shown in the figure) and two rear wheels 29 of the electric transporter 1 are coupled to the transmission gearbox, so that when the motor 23 rotates, it drives the rear wheels 29 to rotate accordingly and further drives the electric transporter 1 to move forward (or backward) by the rotation of the rear wheels. A pulling handle 280 disposed on the surface of the electromagnetic brake 28 is coupled to a pulling rod 26, and a part of the pulling rod 26 passes through the car body cover 21, and the electromagnetic brake 28 is coupled to one side of the motor 23. The electromagnetic brake 28 comprises a main body 281, an electric armature plate 282, a brake lining 283 and a friction plate 284 disposed in sequence between the pulling handle 280 and the motor 23 as shown in FIG. 3. When the pulling rod 26 is pressed down and the power is turned on, a control rod 110 disposed on the steering handle module 11 can be operated to electrically connect the electromagnetic brake 28, so that the electric armature plate 282 separates the brake lining 283 from the friction plate 284 and the rotor of the motor 23 drives the gear of the transmission gearbox. As a result, the electric transporter 1 is driven forward or backward according to the operation of the control rod 110.

If the power of the motor 23 is turned off and the pulling rod 26 is pressed down, then the electric armature plate 282 will press the brake lining 283 on the friction plate 284, and thus the rotor of the motor 23 is braked by the electromagnetic brake 28 and cannot be rotated anymore. Further, the electromagnetic brake 28 for the rotor of the motor 23 is released by pulling up the pulling rod 26 to allow drivers to manually move the electric transporter 1. The electric armature plate 282 drives the brake lining 283 to be separated from the friction plate 284, so that the rotor of the motor 23 is rotated to drive the electric transporter 1.

Since the electric transporter 1 does not have any safety device installed at the position of the pulling rod 26, therefore if the driver releases the control rod 110 and pulls the pulling rod 26 by mistake, then the pulling handle 280 will drive the brake lining 283 to be separated from the friction plate 284 and the rotor of the motor 23 is released. The electric transporter 1 cannot be braked and stopped automatically when the electric transporter 1 is driven uphill or downhill, and thus causing the electric transporter 1 to slide down and endangering the driver's safety or even causing car accidents. Therefore, the installation of a safety device at the position of the pulling rod 26 for preventing drivers to pull the pulling rod 26 by mistake demands immediate attention and solutions.

### SUMMARY OF THE INVENTION

In view of the aforementioned shortcomings of the prior-art, the inventor of the present invention based on years of experience in the related industry to conduct extensive researches and experiments and finally invented a safety device of an electric transporter in accordance with the present invention to contribute to the general public.

The primary objective of the present invention is to provide a safety device disposed around a pulling rod of a car body cover of an electric transporter for restricting the movement of the pulling rod and avoiding drivers to pull the pulling rod by mistake while the electric transporter is traveling. Pulling the rod disables the brake of the motor, which will cause dangers to the driver when driving uphill or down hill or even result in car accidents.

Another objective of the present invention is to provide a safety device comprising a restoring mechanism for keeping a safety cover of the safety device at a position around the periphery of the pulling rod to restrict the pulling of the pulling rod. If the safety cover of the safety device is operated to release the pulling rod from the restriction, the safety cover of the safety device presses at a position next to a blocking member of the pulling rod. If the pulling rod is pressed, the safety device is restored by the restoring mechanism to a position where the periphery of the pulling rod restricts the pulling rod from being pulled.

The above and other objects, features and advantages of the present invention will become apparent from the following detailed description taken with the accompanying drawings.

### BRIEF DESCRIPTION OF THE DRAWINGS

FIG. 1 is a perspective view of a prior-art electric transporter.
FIG. 2 is an illustrative view of a prior-art driving section.
FIG. 3 is an illustrative view of an electromagnetic brake according to the present invention.
FIG. 4 is a perspective view of the electric transporter according to the present invention.
FIG. 5 is an illustrative view of the driving section according to the present invention.
FIG. 6 is an illustrative view of the pulling rod and electromagnetic brake according to the present invention when the pulling rod is pressed.
FIG. 7 is an illustrative view of the pulling rod and electromagnetic brake according to the present invention when the pulling rod is pulled.
FIG. 8 is an illustrative view of the pulling rod and safety device according to the present invention when the pulling rod is pressed.
FIG. 9 is an illustrative view of the pulling rod and safety device according to the present invention when the pulling rod is pulled.
FIG. 10 is an exploded view of the safety device of the present invention.
FIG. 11 is another exploded view of the safety device of the present invention.

### DETAILED DESCRIPTION OF THE PREFERRED EMBODIMENTS

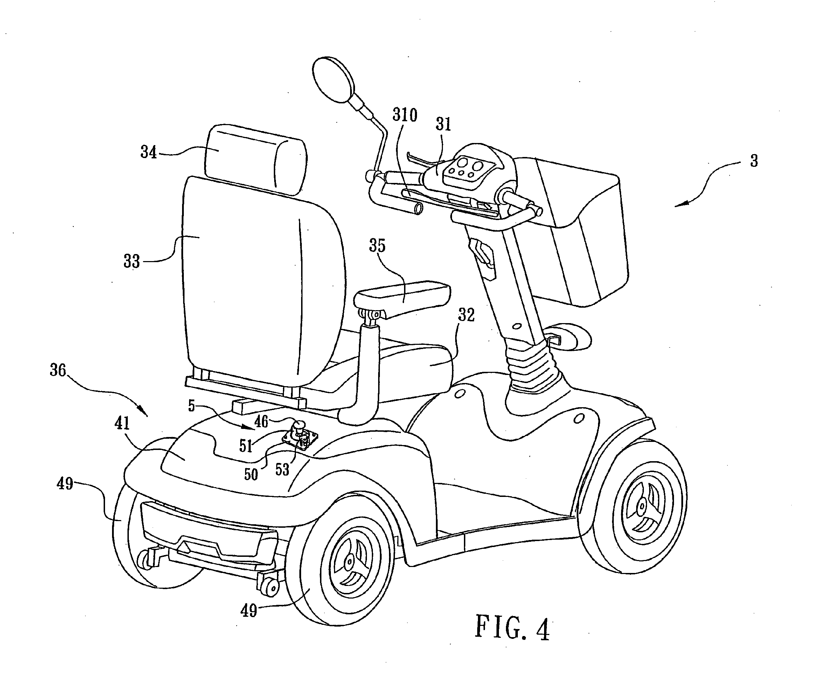

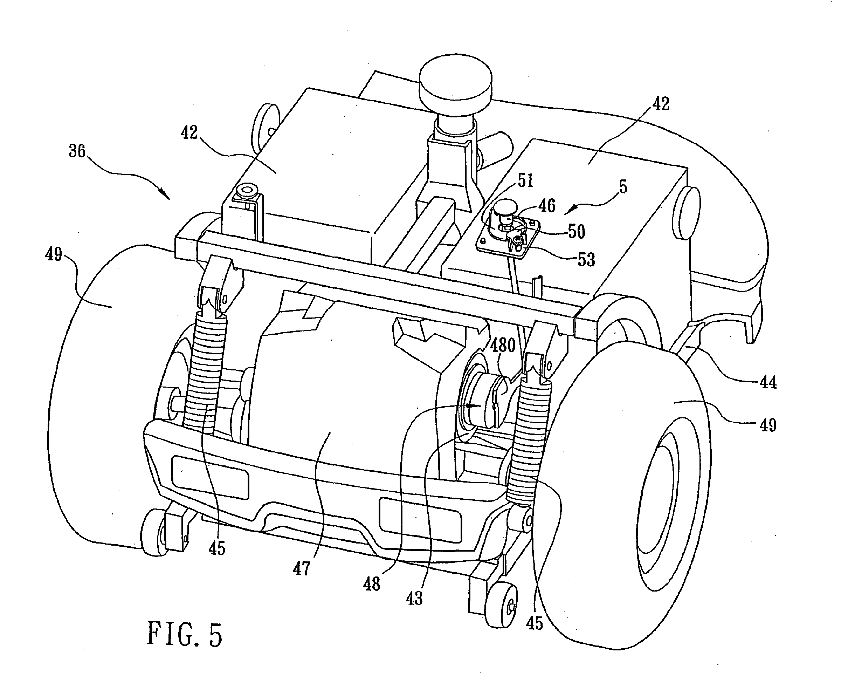

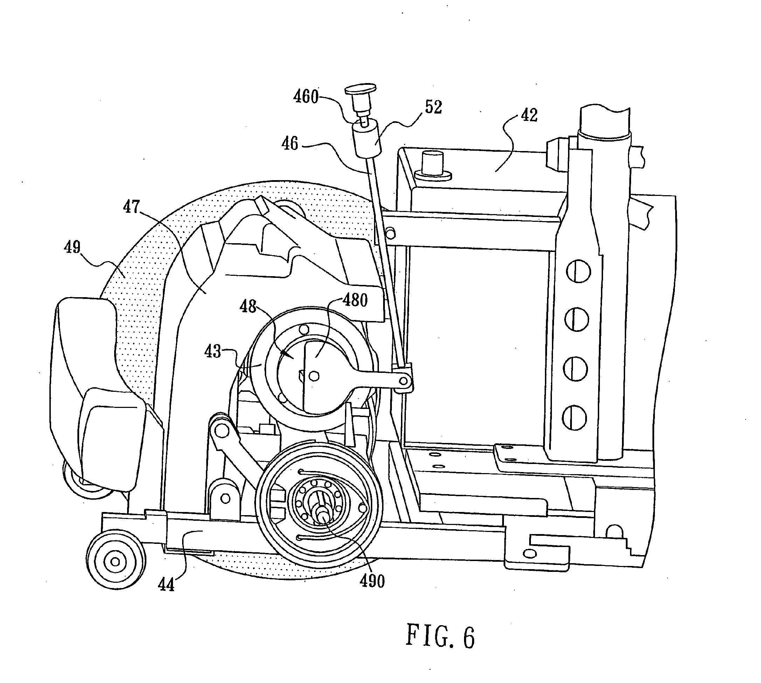

Please refer to FIGS. 4, 5 and 6 for a safety device of an electric transporter, which comprises a steering handle module 31 disposed at the front of an electric transporter 3, a seat cushion 32 disposed at the rear, a backrest 33 disposed at the back of the seat cushion 32; a headrest 34 disposed at the top of the backrest 33, such that when a user drives the electric transporter 3, the user sits on the seat cushion 32 and leans his/her back and head against the backrest 33 and the headrest 34 respectively; a pair of horizontal armrests 35 separately disposed on both sides of the seat cushion 32; and a driving section 36 disposed under the seat cushion 32.

The driving section 36 is covered by a car body cover 41, and the driving section 36 comprises a battery 42 (such as an electric cell), a motor 43, a controller (not shown in the figure), a protective cover 47 and an electromagnetic brake 48. The electric transporter 3 achieves its shock absorption effect by a pair of shock absorbers 45, wherein the controller and the motor 43 are installed inside the protective cover 47, and the protective cover 47 is installed on a chassis 44 of the electric transporter 3, such that the car body cover 41 and the protective cover 47 can prevent dust and water moisture from entering into the controller and the motor 43. The battery 42, motor 43 and shock absorbers 45 are installed on the chassis 44, and the battery 42, motor 43 and controller are electrically coupled, such that the battery 42 can supply electric power to the motor 43 and the controller as to rotate the motor 43 according to the control signal of the controller. The motor 43 is coupled to a transmission gearbox (not shown in the figure) and two rear wheels 49 of the electric transporter 3 are coupled to a rear wheel axle 490 of the transmission gearbox, so that when the motor 43 rotates, it drives the rear wheels 49 to rotate accordingly and further drives the electric transporter 3 to move forward (or backward) due to the rotation of the rear wheels.

Please refer to FIGS. 3, 4 and 6. A pulling handle 480 disposed on the surface of the electromagnetic brake 48 is coupled to a pulling rod 46, and a part of the pulling rod 46 passes through the car body cover 41, and the electromagnetic brake 48 is coupled to one side of the motor 43. The electromagnetic brake 48 comprises a main body 481, an electric armature plate 482, a brake lining 483 and a friction plate 484 disposed in sequence between the pulling handle 480 and the motor 43. When the pulling rod 46 is pressed and the power is turned on, a control rod 310 disposed on the steering handle module 31 can be operated to electrically connect the electromagnetic brake 48, so that the electric armature plate 482 separates the brake lining 483 from the friction plate 484 and the rotor of the motor 43 drives the gear of the transmission gearbox. As a result, the electric transporter 3 is driven forward or backward according to the operation of the control rod 310.

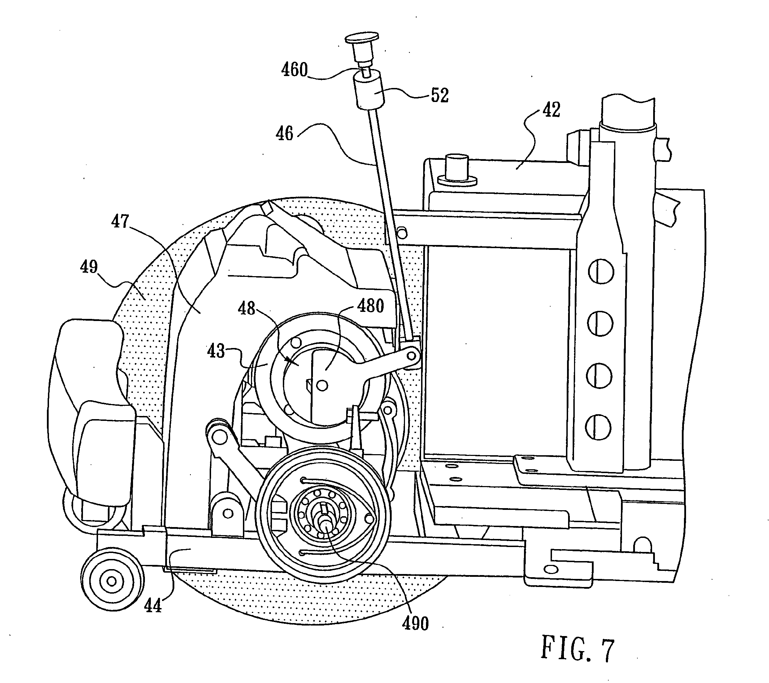

If the power of the motor 43 is turned off and the pulling rod 46 is pressed down, then the electric armature plate 482 will press the brake lining 483 on the friction plate 484, so that the rotor of the motor 43 is braked by the electromagnetic brake 48 and cannot be rotated anymore. Further, please refer to FIGS. 3 and 7. The electromagnetic brake 48 for the rotor of the motor 43 can be released by pulling up the pulling rod 46 to allow drivers to manually move the electric transporter 3. The electric armature plate 482 drives the brake lining 483 to be separated from the friction plate 484, so that the rotor of the motor 43 can be rotated to drive the electric transporter 3.

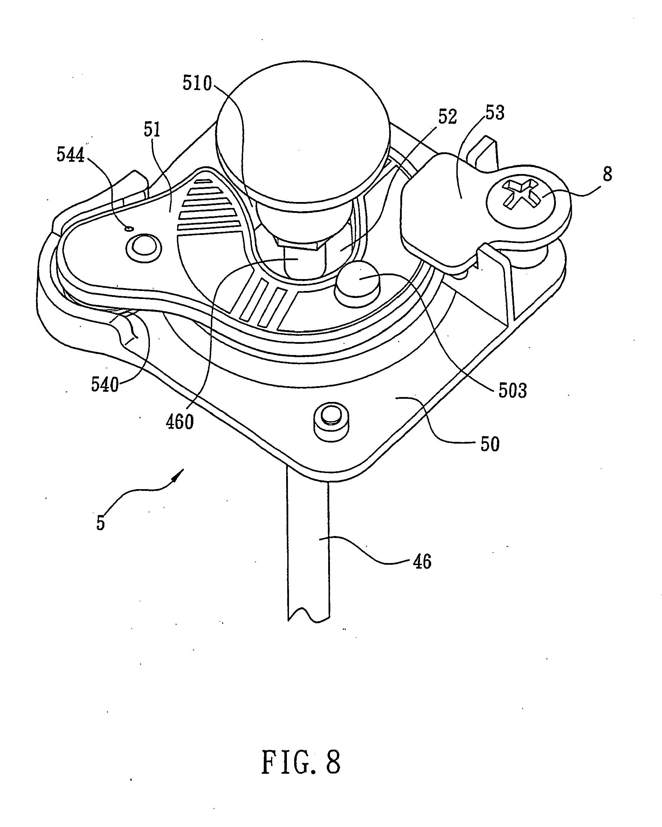

Please refer to FIGS. 4, 8 and 9 for the present invention. The car body cover 41 comprises a safety device 5 movably coupled around the periphery of the pulling rod 46, and the safety device 5 can be moved to surround the pulling rod 46 and restrict the pulling rod 46 from being pulled, or the safety device 5 can be moved to a position away from the pulling rod 46 to release the restriction of the safety device 5, so that the pulling rod 46 can be pulled. Therefore, before the safety device 5 is released from the restriction of the pulling rod 46, a user cannot pull up the pulling rod 46 while driving, and thus preventing the pulling rod from being pulled by mistake and overcoming the shortcoming of the prior-art.

The safety device 5 comprises a positioning base 50, a safety cover 51 and a safety cover 52, wherein the positioning base 50 comprises a through hole 500 at a central position of the positioning base 50 and the pulling rod 46 passes our from the positioning base 50 through the through hole 500. Further, the safety cover 51 is installed on the positioning base 50 at a position adjacent to the through hole 500, and the safety cover 51 comprises an indentation 510. The blocking member 52 is installed at a free end proximate to the pulling rod 46, and the size of the blocking member 52 ranges from the through hole 500 to the indentation 510, such that a neck section 460 is defined between the free end of the pulling rod 46 and the blocking member 52. If the safety device 5 is released from the restricted position of the pulling rod 46 and the pulling rod 46 is pulled, then the blocking member 52 passes through and out from the through hole 500. If the pulling rod 46 is pressed, the indentation 510 of the safety cover 51 can be moved to the surrounding of the neck section 460. Since the blocking member 52 is larger than the through hole of the indentation 510, the blocking member 52 is locked by the safety cover 51. Even if the pulling rod 46 is pulled, the blocking member 52 cannot pass through the through hole 500 as to avoid the pulling rod 46 from being pulled by mistake.

In a preferred embodiment of the present invention, the safety device 5 comprises a blocking plate 53, and the blocking plate 53 is installed on the positioning base 50 at a position corresponding to the safety cover 51, and a part of the blocking plate 53 is extended to the through hole 500. Further, the distance between the blocking plate 53 and the positioning base 50 is equal to or greater than the thickness of the safety cover 51. If the indentation 510 of the safety cover 51 is moved to the surrounding of the neck section 460, the safety cover 51 is restricted by the top of the blocking plate 53 for increasing the resistance of the safety cover 51, and the blocking plate 53 is fixed on the positioning base 50 by a fixture 8.

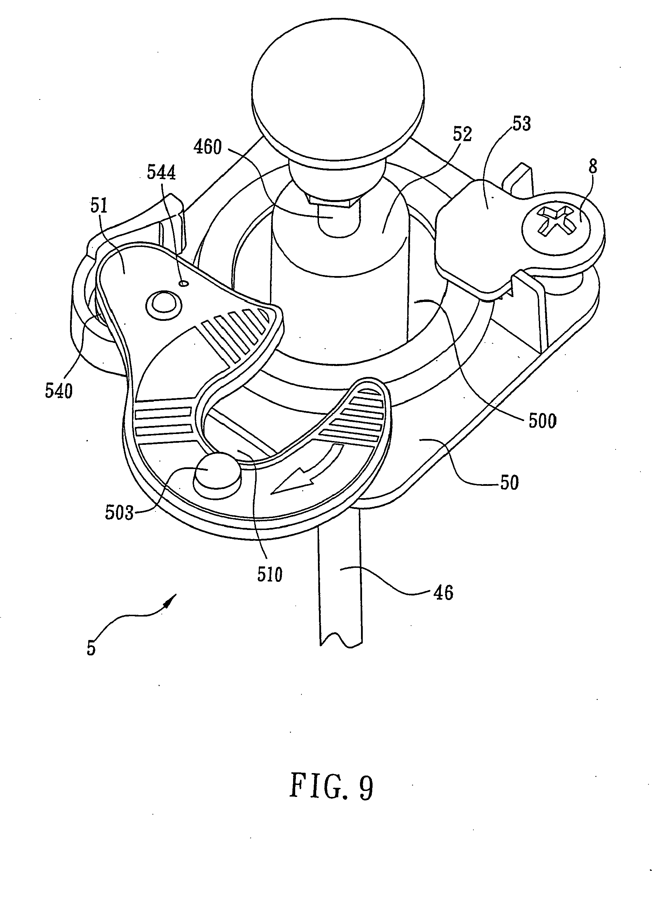

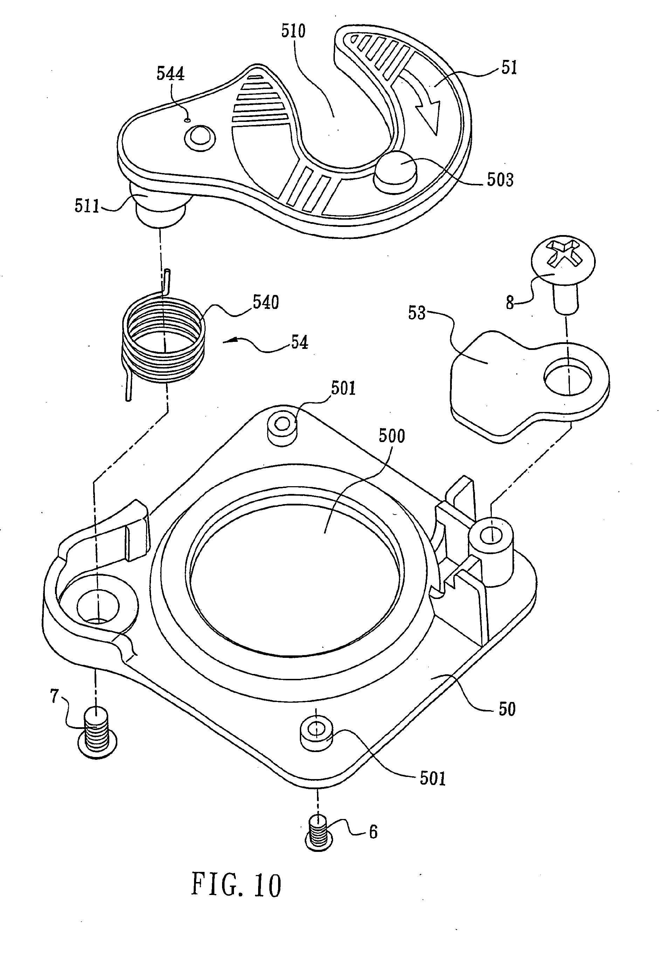

Please refer to FIGS. 9 and 10. The safety device 5 comprises a restoring mechanism 54 at the position where the positioning base 50 and the safety cover 51 are pivotally coupled. The restoring mechanism 54 can keep the safety cover 51 at the periphery of the neck section 460 of the pulling rod 46 for restricting the pulling of the pulling rod 46. If the safety cover 51 is operated to release the restriction of the pulling rod 46, the safety cover 51 can be restored to the position at the periphery of the neck section 460 by using the restoring force of the restoring mechanism 54.

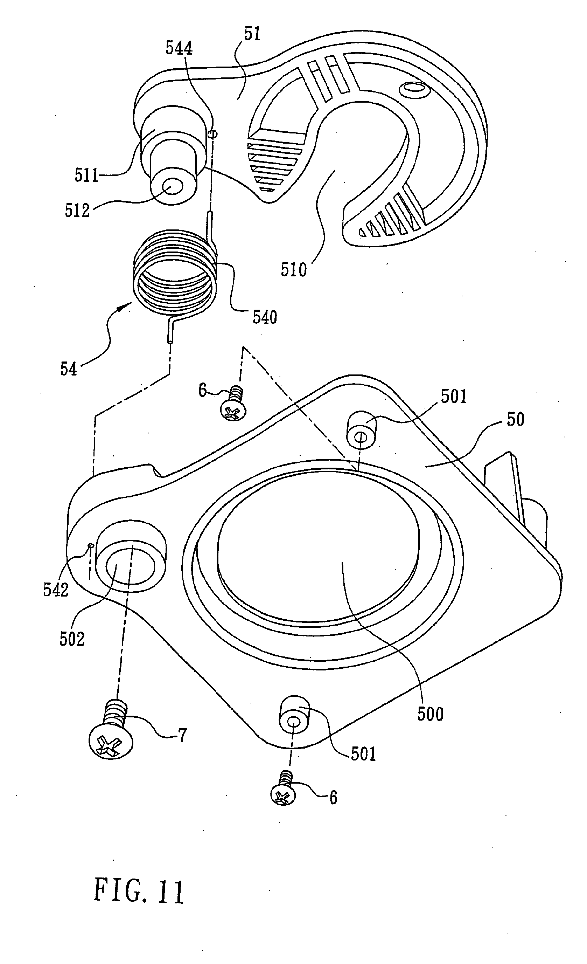

Please refer to FIGS. 10 and 11 for a preferred embodiment of the present invention. The restoring mechanism 54 comprises a torsion spring 540, a first positioning section 542 and a second positioning section 544; wherein the first positioning section 542 is installed on the positioning base 50, and the second positioning section 544 is installed on the first positioning section 542 at a predetermined distance from the safety cover 51, and one end of the torsion spring 540 is fixed onto the first positioning section 542 and the other end is fixed on the second positioning section 544, such that if the safety cover 51 has not been pulled, the indentation 510 can be kept at the periphery of the neck section 460, so that the safety cover 51 can be locked by the blocking member 52 to prevent the pulling rod from being pulled. If the safety cover 51 is operated to release the indentation 510 from the restriction of the blocking member 52, the safety cover 51 will press against the position adjacent to the blocking member 52 by using the resilience of the torsion spring 540. After the pulling rod 46 is pressed, the indentation 510 is restored to the position around the neck section 460.

Further, two screw pillars 501 are disposed around the through hole 500 such that two connecting members 6 can be secured onto the two screw pillars 501, and the positioning base 50 is fixed onto the car body cover 41, and the safety cover 51 disposed at the position pivotally coupled to the positioning base 50 comprises a protruded pillar 511, and one part of the protruded pillar 511 is precisely sheathed into the torsion spring 540. The protruded pillar comprises a screw hole 512 disposed at one end facing the positioning base 50, and the positioning base 50 comprises a connecting hole 502 disposed at the pivotal connection position of the safety cover 51 for connecting the protruded pillar 511 as to connect a connecting member 7 between the screw hole 512 and the connecting hole 502 and pivotally couple the safety cover 51 onto the positioning base 50. Further, the safety cover 51 comprises a protrusion 503 disposed on one side with its back facing the positioning base 50 and proximate to the position of the indentation 510 for facilitating users to rotate the safety cover 51.

With the foregoing components, when the torsion spring 540 is installed to the safety cover 51 and secured to the safety cover 51 and the blocking plate 53 is secured to the positioning base 50, two connecting members 6 are secured to the two screw pillars 501 as to install the positioning base 50 onto the car body cover 41. Therefore, when the pulling rod is pulled, it is necessary to open the safety cover 51. If the safety cover 51 is not opened first and the pulling rod 46 is pulled by force, then the blocking member 52 will be pressed by the safety cover 51. In addition, after the pulling rod 46 is pulled, the safety cover 51 is restored by the resilience of the torsion spring 540, so that the safety cover 51 cannot restore the indentation 510 to the position of the neck section 460. Then, when the pulling rod 45 is pressed to the indentation 510 of the safety cover 51 and extend into the position of the neck section 460, the electric transporter 3 can travel in normal conditions. In other words, the pulling rod 46 cannot be pulled directly due to the restriction of the safety device 5 as to avoid the pulling rod of a prior-art electric transporter 1 from being pulled by mistake during the driving, and cause dangers to users or even results in car accidents.

While the invention has been described by means of specific embodiments, numerous modifications and variations could be made thereto by those skilled in the art without departing from the scope and spirit of the invention set forth in the claims.

## Claims

1. A safety device of electric transporter, comprising a driving section disposed on a chassis of an electric transporter and covered by a car body cover, a motor disposed on said driving section and an electromagnetic brake coupled to said motor, a pulling handle disposed on one side of the motor facing the back of the electromagnetic brake, and said pulling handle being coupled to a pulling rod protruded out from said car body cover for selectively pulling and pressing down to control the movement of said electromagnetic brake, thereby said motor being braked by said electromagnetic brake and said motor not being braked by said electromagnetic respectively, **characterized in that**:
said car body cover comprises a safety device disposed at the periphery of said pulling rod and said safety device is selectively moved to lock said pulling rod and restrict said pulling rod from being pulled and moved to a position away from said pulling rod to release said pulling rod from the restriction of said safety device, so that said pulling rod is capable of being pulled.

2. The safety device of electric transporter of claim 1, wherein said safety device comprises:
a positioning base, comprising a through hole disposed at the central position, and said pulling rod passes through said through hole and out from said positioning base;
a safety cover, being disposed on said positioning base adjacent to said through hole and having an indentation;
a blocking member, being disposed on said pulling rod and if said pulling rod being pressed, then said indentation of said safety cover being moved to press said blocking member, and if said pulling rod being pulled, said
blocking member passing through and out from said through hole.

3. The safety device of electric transporter of claim 2, wherein said safety device further comprises a blocking plate disposed on said positioning base at a position corresponding to said safety cover.

4. The safety device of electric transporter of claim 2, wherein said safety device comprises a restoring mechanism disposed on said positioning base at a position pivotally coupled to said safety cover, and thereby after said restoring mechanism presses said pulling rod, said safety cover has a resilience force to restore said safety cover to secure said pulling rod.

5. The safety device of electric transporter of claim 4, wherein said restoring mechanism fixes one end of a torsion spring to a first positioning section disposed on said positioning base and the other end to a second positioning section disposed on said safety cover.

6. The safety device of electric transporter of claim 5, wherein said cover comprises a protruded pillar disposed at a position pivotally coupled to said positioning base, and one part of said protruded pillar is coupled to said torsion spring.

7. The safety device of electric transporter of claim 2, wherein said safety cover of said safety device comprises a protrusion.
